# FASCICULE DE BREVET EUROPEEN

(11) **EP 2 897 830 B1**
(45) Date de publication et mention de la délivrance du brevet: **02.08.2017**
(21) Numéro de dépôt: 13774758.0
(22) Date de dépôt: 19.09.2013
(51) Int. Cl.: B60K 15/05

(54) **DISPOSITIF POUR TRAPPE DE VÉHICULE AUTOMOBILE À OUVERTURE AUTOMATIQUE, AGENCEMENT INCLUANT LE DISPOSITIF ET VÉHICULE AUTOMOBILE INCLUANT L'AGENCEMENT**
VORRICHTUNG FÜR EINE KRAFTFAHRZEUGKLAPPE MIT AUTOMATISCHER ÖFFNUNG, ANORDNUNG MIT DER VORRICHTUNG UND KRAFTFAHRZEUG MIT EINER SOLCHEN ANORDNUNG
DEVICE FOR A MOTOR VEHICLE HATCH HAVING AN AUTOMATIC OPENING, ARRANGEMENT INCLUDING THE DEVICE AND MOTOR VEHICLE INCLUDING THE ARRANGEMENT

(30) Priorité: 19.09.2012 FR 1258765
(43) Date de publication de la demande: 29.07.2015
(73) Titulaire: Renault S.A.S., 92100 Boulogne-Billancourt (FR)
(72) Inventeur: BERRIOS, Guillermo, Curitiba PR (BR); PEREIRA, Fernando, Curitiba PR (BR)
(86) Numéro de dépôt international: PCT/FR2013/052160
(87) Numéro de publication internationale: WO 2014/044974

(56) Documents cités:
- EP-A1- 0 858 923
- EP-A2- 1 410 936
- DE-C1- 4 028 897
- DE-U1- 29 702 581
- DE-U1-202004 005 554
- FR-A2- 2 482 648
- GB-A- 2 149 447
- US-A- 3 912 315
- US-A- 4 961 601
- US-A1- 2008 258 552

## Description

### Domaine technique de l'invention

L'invention concerne le domaine des véhicules automobiles.

L'invention a pour objet plus particulièrement un dispositif permettant l'ouverture d'une trappe, notamment à carburant, d'un véhicule automobile.

### État de la technique

Actuellement, il existe des trappes à ouverture automatique articulées à un élément de carrosserie. Une telle trappe est généralement associée à un organe de verrouillage variant entre une position de verrouillage et une position de déverrouillage. En position de verrouillage, ledit organe de verrouillage maintient la trappe fermée, et en position de déverrouillage il libère la trappe de sorte qu'un ressort d'expulsion provoque l'ouverture de ladite trappe.

Par « ouverture automatique », on entend que l'ouverture de la trappe est réalisée à partir du poste de conduite par activation d'un actionneur.

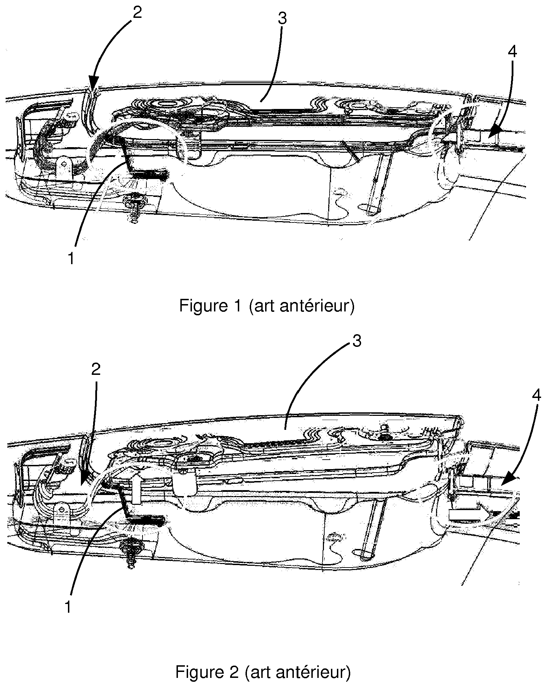

Comme illustré aux figures 1 et 2, le ressort d'expulsion 1 est monté au niveau de l'articulation 2 de la trappe 3. Cette articulation 2 est disposée à une première extrémité de la trappe 3 opposée à une deuxième extrémité de la trappe 3 au niveau de laquelle est situé l'organe de verrouillage 4.
Sur la figure 1 l'organe de verrouillage 4 est dans la position de verrouillage, et à la figure 2 l'organe de verrouillage 4 est dans la position de déverrouillage.
Il résulte de la réalisation des figures 1 et 2 une déformation de la trappe 3 lorsque cette dernière est en position fermée. Cette déformation est notamment due aux forces exercées par le ressort 1 au niveau de l'articulation 2 de la trappe 3. Cette déformation pose donc des problèmes d'aspects extérieurs et de géométrie.

EP 0 858 923 ou DE 40 28 897 décrivent un dispositif pour trappe à carburant selon le préambule de la revendication 1.

### Objet de l'invention

Le but de la présente invention est de proposer une solution qui remédie aux inconvénients listés ci-dessus.

On tend vers ce but avec un dispositif selon la revendication 1. Avantageusement, le dispositif comporte un premier organe de verrouillage de la trappe, ledit premier organe de verrouillage étant apte à varier entre une position de verrouillage dans laquelle il est destiné à coopérer avec un deuxième organe de verrouillage associé à la trappe de sorte à maintenir la trappe en position fermée et le levier dans la première position, et une position de déverrouillage dans laquelle il libère la trappe de sorte à permettre le passage du levier de sa première position à sa deuxième position.

Selon l'invention, le dispositif comporte un support, le levier étant articulé, notamment monté à rotation, sur ledit support.

De préférence, l'organe de sollicitation est un ressort de compression, prenant appui d'une part au niveau du support et d'autre part au niveau du levier.

Selon l'invention, le support comporte une cavité dans laquelle est logé le ressort, une première extrémité du ressort étant montée au niveau d'un fond de la cavité et une deuxième extrémité du ressort, opposée à la première extrémité du ressort, étant montée au niveau d'une portée d'appui du levier de sorte à le solliciter constamment vers sa deuxième position.
Par exemple, dans la première position du levier, le ressort est plus comprimé que dans la deuxième position du levier.
De préférence, le premier organe de verrouillage est monté au niveau du support.

En outre, le premier organe de verrouillage peut comporter un coulisseau monté à coulissement dans une glissière du support.

De manière avantageuse, le premier organe de verrouillage dépassant du support dans la position de verrouillage, le dispositif comporte un élément en saillie du support recouvrant partiellement le premier organe de verrouillage dans sa position de verrouillage, ledit élément en saillie étant destiné à être interposé entre le premier organe de verrouillage et un espace séparant la trappe d'un élément de carrosserie du véhicule situé dans la continuité de la trappe en position fermée de cette dernière.

L'invention est aussi relative à un agencement pour véhicule automobile comprenant : une partie de carrosserie munie d'un espace creux, notamment destiné à rendre accessible un réservoir de carburant du véhicule ; une trappe du véhicule articulée au niveau de l'espace creux et configurée de sorte à varier entre une position ouverte et une position fermée ; et un dispositif, tel que décrit, monté au niveau de l'espace creux de sorte qu'en position fermée de la trappe, le levier exerce constamment une poussée sur la trappe en la sollicitant vers sa position ouverte.

Selon une mise en oeuvre de l'agencement, le dispositif comporte un premier organe de verrouillage et la trappe comporte un deuxième organe de verrouillage, et dans une position fermée et verrouillée de la trappe, le premier organe de verrouillage traverse un orifice du deuxième organe de verrouillage et le levier prend appui sur le deuxième organe de verrouillage.

L'invention est aussi relative à un véhicule automobile comprenant un agencement tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 représentent des vues au niveau d'une trappe à carburant à ouverture automatique selon l'art antérieur,
- les figures 3 et 4 illustrent respectivement un dispositif selon une réalisation de l'invention dans une position associée à une trappe fermée et dans une position associée à une trappe ouverte,
- la figure 5 illustre deux organes de verrouillage dont l'un fait partie du dispositif selon l'invention,
- la figure 6 illustre un agencement en position fermée et verrouillée de la trappe,
- la figure 7 illustre un agencement en position ouverte et déverrouillée de la trappe,
- la figure 8 représente une vue éclatée d'une réalisation particulière d'un dispositif selon l'invention,
- la figure 9 illustre une vue de dessus de la figure 8 d'un dispositif assemblé,
- la figure 10 représente une vue de côté d'un agencement équipé d'un élément d'inviolabilité,
- la figure 11 permet de visualiser la course du levier équipant le dispositif,
- la figure 12 est une vue selon A-A de la figure 11 montrant un agencement dont la trappe est fermée et verrouillée.

### Description de modes préférentiels de l'invention

Le dispositif décrit ci-après remplace le simple ressort de l'art antérieur de sorte à permettre une ouverture facile et à limiter la déformation de la trappe.

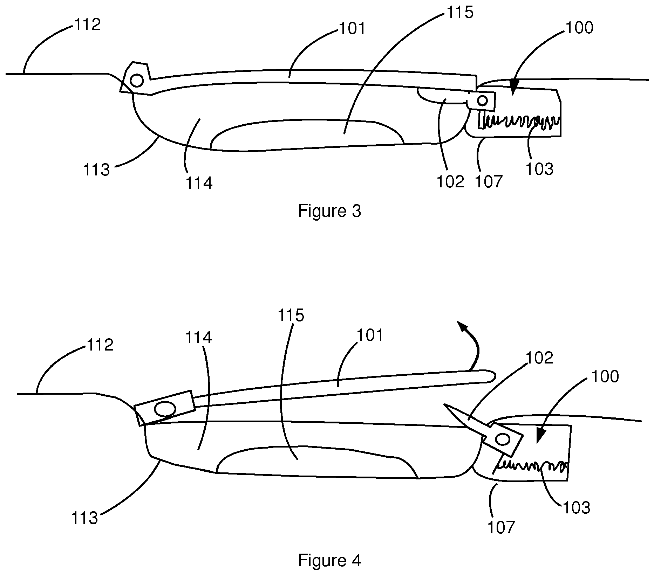

Sur les figures 3 et 4, le dispositif 100 pour trappe 101, notamment à carburant, de véhicule automobile comporte un levier 102 configuré de sorte à varier entre une première position (figure 3) et une deuxième position (figure 4), le passage de la première position à la deuxième position provoquant l'ouverture de la trappe 101. En outre, le dispositif comporte un organe de sollicitation 103 distinct du levier 102 et sollicitant constamment le levier 102 vers la deuxième position.

Cet agencement particulier du dispositif permet d'utilisation d'un levier à la place d'un simple ressort, le levier 102 permettant de moins déformer la trappe 101.

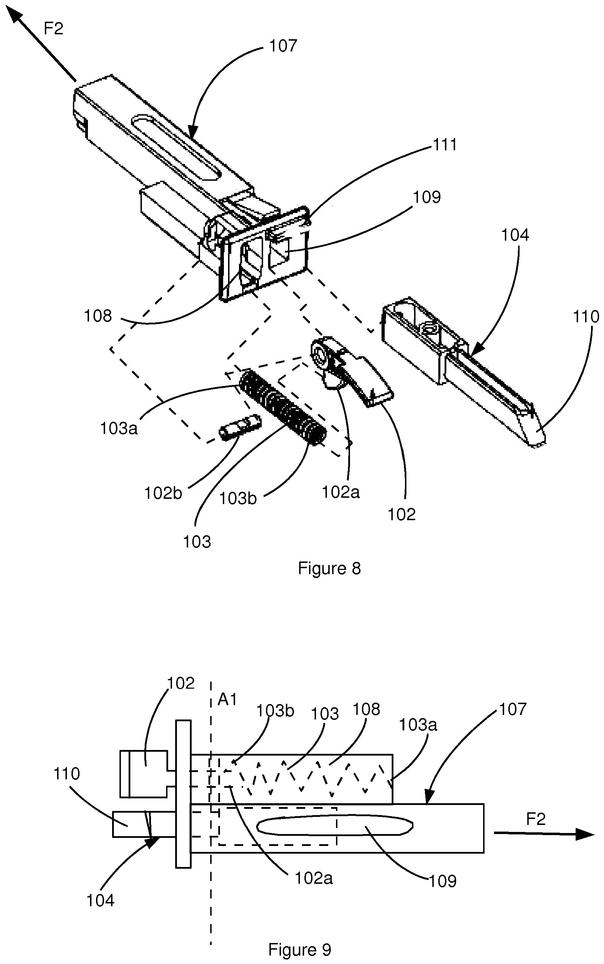

De préférence, le levier 102 et l'organe de sollicitation 103 sont agencés l'un avec l'autre de sorte à former une came. En effet, un mouvement rectiligne dans une direction donnée de l'élément de sollicitation 103 entraîne un mouvement de rotation du levier 102, notamment autour de l'axe A1 visible à la figure 9.

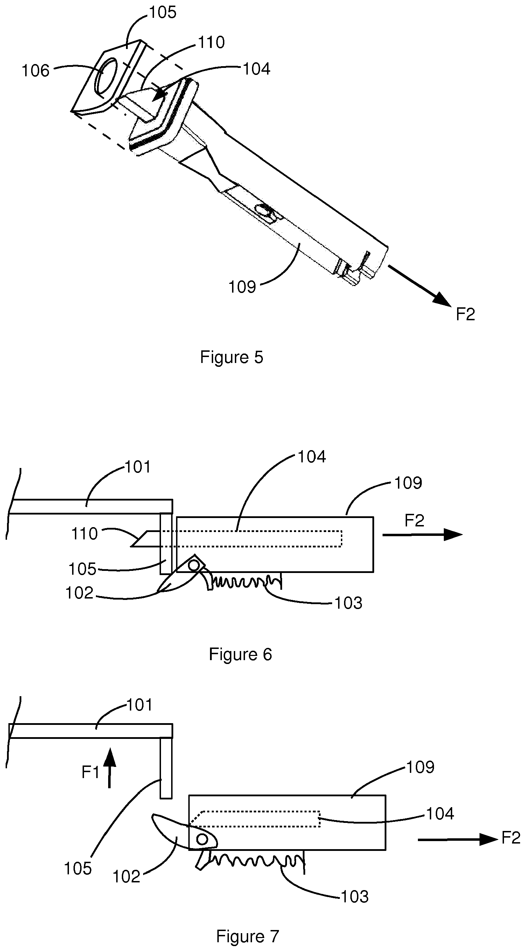

De préférence, comme illustré aux figures 5 à 7, le dispositif comporte en outre un premier organe de verrouillage 104 de la trappe 101, ledit premier organe de verrouillage 104 étant apte à varier entre une position de verrouillage dans laquelle il est destiné à coopérer avec un deuxième organe de verrouillage 105 associé à la trappe 101 (par exemple en traversant un orifice 106 d'une platine) de sorte à maintenir la trappe 101 en position fermée (Figure 6) et une position de déverrouillage dans laquelle il libère la trappe 101 (figure 7) de sorte à permettre le passage du levier de sa première position à sa deuxième position (ceci permettant à la trappe de s'ouvrir en se déplaçant selon la flèche F1 de la figure 7). Par « associé » à la trappe 101, on entend que la trappe comporte ce deuxième organe de verrouillage 105.

En outre, lorsque le premier organe 104 est en position de verrouillage (figure 6), il permet aussi de maintenir le levier 102 dans la première position.

En fait, dans un agencement particulier comprenant le dispositif 100 et une trappe 101 associée au deuxième organe de verrouillage 105, lorsque le premier organe de verrouillage 104 coopère avec le deuxième organe de verrouillage 105 de sorte à être dans la position de verrouillage, c'est la trappe 101, grâce au verrouillage, qui exerce une pression sur le levier 102 induisant une compression de l'organe de sollicitation 103 (figure 6). Lorsque la trappe 101 est libérée par la mise en position de déverrouillage du premier organe de verrouillage 104, l'organe de sollicitation 103 se détend, transmettant un mouvement au levier 102 permettant l'ouverture de la trappe 101 (figure 7).

Selon une mise en oeuvre particulière illustrée aux figures 8 et 9, le dispositif comporte un support 107, le levier 102 étant articulé sur ledit support 107. Sur la figure 9, cette articulation est en fait avantageusement un montage à rotation (par exemple une liaison pivot), notamment selon l'axe A1. Sur la figure 8, l'axe A1 est associé à la pièce 102b.

De préférence, l'organe de sollicitation 103 est un ressort, notamment un ressort de compression, prenant appui d'une part au niveau du support 107 et d'autre part au niveau du levier 102 (figures 3, 4, et 6 à 9).

Selon une mise en oeuvre particulière des figures 8 et 9, le support 107 comporte une cavité 108 dans laquelle est logé le ressort 103. Une première extrémité 103a du ressort 103 est montée au niveau d'un fond de la cavité 108 et une deuxième extrémité 103b du ressort 103, opposée à la première extrémité 103a du ressort 103, est montée au niveau d'une portée d'appui 102a du levier 102 de sorte à le solliciter constamment vers sa deuxième position. Le ressort 103 est, de préférence, comprimé entre ses deux extrémités 103a, 103b dans la première position du levier 102. Par ailleurs, dans la première position du levier 102, le ressort 103 est plus comprimé que dans la deuxième position du levier 102, et de préférence, dans la deuxième position du levier, le ressort 103 est dans une configuration représentative de sa hauteur libre (c'est-à-dire son état si aucune force destinée à le comprimer n'est appliquée entre ses deux extrémités 103a, 103b).

Avantageusement, le premier organe de verrouillage 104 est monté au niveau du support 107. Ainsi, de préférence, un même support 107, formant de préférence une pièce monobloc, permet de regrouper les fonctions de verrouillage/déverrouillage de la trappe 101 et d'ouverture de la trappe 101.

De préférence, comme illustré aux figures 5 à 9, le premier organe de verrouillage 104 comporte un coulisseau monté à coulissement dans une glissière 109 du support 107.

Le coulissement du coulisseau peut être mis en oeuvre pour assurer le passage de la position de verrouillage à la position de déverrouillage par actionnement d'un actionneur, de préférence situé au niveau du poste de conduite du véhicule. L'actionneur peut être électrique ou mécanique. De préférence, après actionnement de l'actionneur et libération de la trappe 101 provoquant son ouverture par le levier 102, le coulisseau revient dans une position représentative de la position de verrouillage, mais ne verrouille pas la trappe 101 car celle-ci est ouverte, empêchant ainsi la coopération entre le premier organe de verrouillage 104 et le deuxième organe de verrouillage 105. Après son ouverture, la trappe 101 peut être refermée manuellement. Afin de réaliser un verrouillage automatique de la trappe 101 lors de sa fermeture manuelle, le coulisseau peut comporter un biseau 110 sur lequel vient en appui, lors de la fermeture, le deuxième organe de verrouillage 105. En continuant l'effort de fermeture, le deuxième organe de verrouillage 105 glisse donc le long du biseau en enfonçant plus ou moins le coulisseau dans sa glissière 109 (selon la direction indiquée par la flèche F2). Ensuite, par retour automatique, le coulisseau vient s'engager dans l'orifice 106 du deuxième organe de verrouillage 105, réalisant ainsi le verrouillage en position fermée de la trappe 101. Ceci implique que le coulisseau est constamment sollicité vers une position représentative de la position de verrouillage.

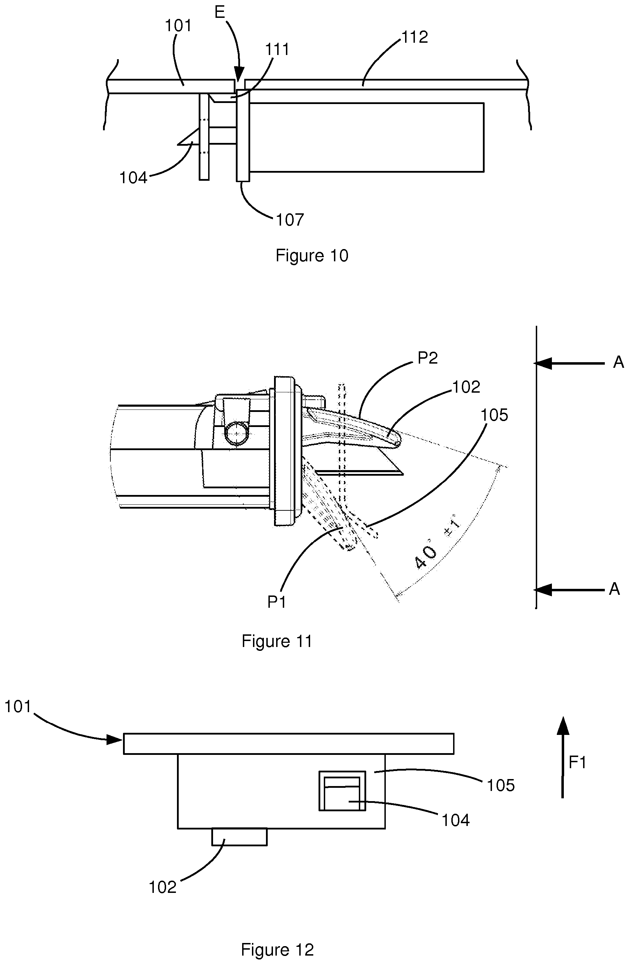

Selon un perfectionnement visible aux figures 8 et 10, le premier organe de verrouillage 104 dépasse du support 107 dans la position de verrouillage et le dispositif comporte un élément en saillie 111 du support 107. Cet élément en saillie 111 recouvre partiellement le premier organe de verrouillage 104 dans sa position de verrouillage et est destiné à être interposé entre le premier organe de verrouillage 104 et un espace E séparant la trappe 101 d'un élément de carrosserie 112 du véhicule situé dans la continuité de la trappe 101 en position fermée de cette dernière. Cet élément en saillie 111 sert alors pour l'inviolabilité de l'ouverture de la trappe 101.

Selon les figures 3 et 4, un agencement pour véhicule automobile peut comprendre une partie de carrosserie 113 munie d'un espace creux 114 notamment destiné à rendre accessible un réservoir de carburant du véhicule. Par ailleurs, l'agencement comporte une trappe 101, notamment à carburant, du véhicule articulée au niveau de l'espace creux 114 et configurée de sorte à varier entre une position ouverte (figure 4) et une position fermée (figure 3). Sur les figures 3 et 4, après ouverture de la trappe 101, un bouchon d'accès 115 au réservoir, de préférence simplement vissé, peut être accessible. Un dispositif tel que décrit ci-dessus est monté au niveau de l'espace creux de sorte qu'en position fermée de la trappe 101 (figure 3), le levier 102 exerce constamment une poussée sur la trappe 101 la sollicitant vers sa position ouverte. De préférence, cette poussée est contrecarrée par la coopération des premier et deuxième organes de verrouillage 104, 105 décrits précédemment en position de verrouillage du premier organe de verrouillage, mais dès que le premier organe passe dans la position de déverrouillage, le levier 102 ouvre automatiquement la trappe 101.

Dans le cas où l'ouverture de la trappe 101 par l'actionneur situé au niveau du poste de conduite ne provoque pas l'ouverture de la trappe 101, l'agencement peut comporter un actionneur de secours, par exemple un élément filaire (fil, cordelette, câble métallique ou autre) attaché d'une part au coulisseau et accessible d'autre part par l'intérieur du véhicule de sorte qu'une traction exercée sur ledit élément filaire permette un déverrouillage manuel de secours de la trappe 101.

On comprend de ce qui a été dit ci-dessus que la trappe 101 peut être ouverte ou fermée et verrouillée ou déverrouillée. Le passage de la position verrouillée à la position déverrouillée de la trappe est réalisé par le premier organe de verrouillage 104 en coopération avec le deuxième organe de verrouillage 105. En position fermée de la trappe, cette dernière affleure avec un élément de carrosserie 112 l'entourant. En position ouverte, la trappe 101 forme un angle avec l'élément de carrosserie 112, et permet par exemple de remplir le réservoir de carburant du véhicule.

En outre, on comprend qu'en position fermée de la trappe 101, le levier 102 est en contact avec la trappe 101, et qu'en position ouverte de la trappe 101, le levier 102 n'est plus en contact avec la trappe 101.

Afin de limiter au mieux la déformation de la trappe 101, voire d'éviter totalement sa déformation, la trappe 101 peut comporter une première et une deuxième extrémités opposées. La trappe 101 est alors articulée au niveau de l'espace creux 114 à sa première extrémité et le dispositif est disposé de sorte à coopérer avec la deuxième extrémité de la trappe 101. Cette configuration particulière permet de limiter au mieux les efforts à appliquer pour ouvrir ladite trappe, permettant ainsi d'utiliser un organe de sollicitation dont la force de sollicitation est la plus faible possible.

A titre d'exemple particulier, illustré à la figure 11, la première position P1 du levier 102 est représentée en pointillés et la deuxième position P2 du levier 102 est représentée en traits pleins. La course en rotation du levier 102 entre la première position et la deuxième position est de 40 degrés à plus ou moins 1 degré. De préférence, dans la première position P1 du levier 102, le levier 102 prend appui sur le deuxième organe de verrouillage 105 de la trappe. Ceci permet d'intégrer deux fonctions au deuxième organe de verrouillage et de répartir au mieux les forces afin d'éviter la déformation de la trappe. En effet, sur la figure 12, on voit clairement que le premier organe de verrouillage 104 empêche la remontée du deuxième organe de verrouillage selon la flèche F1 alors que le levier 102 applique sur le deuxième organe de verrouillage 105 une poussée selon F1. Ceci permet d'éviter une déformation de la trappe au niveau d'une surface destinée à affleurer avec la carrosserie extérieure du véhicule. Par exemple, dans la première position, le levier 102 présente une surface d'appui, située à un premier niveau, destinée à être en contact avec la trappe101, notamment avec le deuxième organe de verrouillage 105, et dans la deuxième position cette surface d'appui est située à un deuxième niveau. L'organe de verrouillage 104 est disposé entre ces deux niveaux.

Autrement dit, de manière avantageuse, l'agencement comporte le premier organe de verrouillage 104 du dispositif et la trappe 101 comporte le deuxième organe de verrouillage 105. Dans une position fermée et verrouillée de la trappe 105, le premier organe de verrouillage 104 traverse un orifice du deuxième organe de verrouillage 105 et le levier 102 prend appui sur le deuxième organe de verrouillage 105, notamment sur une surface du deuxième organe de verrouillage 105 distale de la jonction entre le deuxième organe de verrouillage 105 et le reste de la trappe 101.

L'invention est aussi relative à un véhicule automobile comprenant un agencement tel que décrit.

## Revendications

1. Dispositif (100) pour trappe (101) à carburant, de véhicule automobile comportant :
- un levier (102) configuré de sorte à varier entre une première position et une deuxième position, le passage de la première position à la deuxième position provoquant l'ouverture de la trappe (101),
- un organe de sollicitation (103) tel qu'un ressort (103) distinct du levier (102) et sollicitant constamment le levier (102) vers la deuxième position,
un support (107), le levier (102) étant articulé, notamment monté à rotation, sur ledit support (107),
**caractérisé en ce que** le support (107) comporte une cavité (108) dans laquelle est logé le ressort (103), une première extrémité (103a) du ressort (103) étant montée au niveau d'un fond de la cavité (108) et une deuxième extrémité (103b) du ressort (103), opposée à la première extrémité (103a) du ressort (103), étant montée au niveau d'une portée d'appui (102a) du levier (102) de sorte à le solliciter constamment vers sa deuxième position.

2. Dispositif selon la revendication 1, **caractérisé en ce qu'**il comporte un premier organe de verrouillage (104) de la trappe (101), ledit premier organe de verrouillage (104) étant apte à varier entre une position de verrouillage dans laquelle il est destiné à coopérer avec un deuxième organe de verrouillage (105) associé à la trappe (101) de sorte à maintenir la trappe (101) en position fermée et le levier (102) dans la première position, et une position de déverrouillage dans laquelle il libère la trappe (101) de sorte à permettre le passage du levier (102) de sa première position à sa deuxième position.

3. Dispositif selon l'une quelconque des revendications 1 et 2, **caractérisé en ce que** l'organe de sollicitation (103) est un ressort de compression, prenant appui d'une part au niveau du support (107) et d'autre part au niveau du levier (102).

4. Dispositif selon l'une quelconque des revendications précédentes, **caractérisé en ce que** dans la première position du levier (102), le ressort (103) est plus comprimé que dans la deuxième position du levier (102).

5. Dispositif selon la revendication 2 et l'une des revendications 3 et 4, **caractérisé en ce que** le premier organe de verrouillage (104) est monté au niveau du support (107).

6. Dispositif selon la revendication 5, **caractérisé en ce que** le premier organe de verrouillage (104) comporte un coulisseau monté à coulissement dans une glissière (109) du support (107).

7. Dispositif selon l'une des revendication 5 ou 6, **caractérisé en ce que** le premier organe de verrouillage (104) dépassant du support (107) dans la position de verrouillage, le dispositif comporte un élément en saillie (111) du support (107) recouvrant partiellement le premier organe de verrouillage (104) dans sa position de verrouillage, ledit élément en saillie (111) étant destiné à être interposé entre le premier organe de verrouillage (104) et un espace (E) séparant la trappe (101) d'un élément de carrosserie (112) du véhicule situé dans la continuité de la trappe (101) en position fermée de cette dernière.

8. Agencement pour véhicule automobile comprenant :
- une partie de carrosserie (113) munie d'un espace creux (114), notamment destiné à rendre accessible un réservoir de carburant du véhicule,
- une trappe (101) du véhicule articulée au niveau de l'espace creux (114) et configurée de sorte à varier entre une position ouverte et une position fermée, et
- un dispositif, selon l'une quelconque des revendications 1 à 7, monté au niveau de l'espace creux (114) de sorte qu'en position fermée de la trappe (101), le levier (102) exerce constamment une poussée sur la trappe (101) en la sollicitant vers sa position ouverte.

9. Agencement selon la revendication précédente, **caractérisé en ce que** le dispositif comporte un premier organe de verrouillage (104) et la trappe (101) comporte un deuxième organe de verrouillage (105), et **en ce que** dans une position fermée et verrouillée de la trappe (105), le premier organe de verrouillage (104) traverse un orifice du deuxième organe de verrouillage (105) et le levier (102) prend appui sur le deuxième organe de verrouillage (105).

10. Véhicule automobile comprenant un agencement selon l'une des revendications 8 ou 9.

## Patentansprüche

1. Vorrichtung (100) für eine Kraftstoffklappe (101) eines Kraftfahrzeugs, aufweisend:
- einen Hebel (102), welcher konfiguriert ist, um zwischen einer ersten Position und einer zweiten Position zu variieren, wobei der Übergang von der ersten Position zur zweiten Position das Öffnen der Klappe (101) verursacht,
- ein Vorspannelement (103), wie beispielsweise eine Feder (103), welches vom Hebel (102) verschieden ist und den Hebel (102) ständig in Richtung auf die zweite Position vorspannt,
- eine Halterung (107), wobei der Hebel (102), an der Halterung (107) angelenkt, insbesondere drehbar montiert, ist,
**dadurch gekennzeichnet, dass** die Halterung (107) einen Hohlraum (108) aufweist, in welchem die Feder (103) untergebracht ist, wobei ein Ende (103a) der Feder (103) auf Höhe des Bodens des Hohlraums (108) montiert ist und ein zweites Ende (103b) der Feder (103), welches dem ersten Ende (103a) der Feder (103) gegenüber liegt, auf Höhe einer Stützfläche (102a) des Hebels (102) montiert ist, um ihn ständig in Richtung auf seine zweite Position vorzuspannen.

2. Vorrichtung nach Anspruch 1, **dadurch gekennzeichnet, dass** sie ein erstes Verriegelungselement (104) der Klappe (101) aufweist, wobei das erste Verriegelungselement (104) geeignet ist, zwischen einer Verriegelungsposition, in welcher es dafür vorgesehen ist, mit einem zweiten, mit der Klappe (101) verknüpften Verriegelungselement (105) zusammenzuwirken, um die Klappe (101) in der geschlossenen Position und die Hebel (102) in der ersten Position zu halten, und einer Entriegelungsposition zu variieren, in welcher es die Klappe (101) freigibt, um den Übergang des Hebels (102) aus seiner ersten Position in seine zweite Postion zu ermöglichen.

3. Vorrichtung nach einem der Ansprüche 1 und 2, **dadurch gekennzeichnet, dass** das Vorspannelement (103) eine Druckfeder ist, welche sich einerseits auf Höhe der Halterung (107) und andererseits auf Höhe des Hebels (102) abstützt.

4. Vorrichtung nach einem der vorhergehenden Ansprüche, **dadurch gekennzeichnet, dass** in der ersten Position des Hebels (102) die Feder (103) stärker zusammengedrückt ist als in der zweiten Position des Hebels (102).

5. Vorrichtung nach Anspruch 2 und einem der Ansprüche 3 und 4, **dadurch gekennzeichnet, dass** das erste Verriegelungselement (104) auf Höhe der Halterung (107) montiert ist.

6. Vorrichtung nach Anspruch 5, **dadurch gekennzeichnet dass** das erste Verriegelungselement (104) einen gleitend in einer Schiene (109) der Halterung (107) montierten Schieber aufweist.

7. Vorrichtung nach einem der Ansprüche 5 oder 6, **dadurch gekennzeichnet, dass** das erste Verriegelungselement (104) in der Verriegelungsposition über die Halterung (107) hinausragt, die Vorrichtung ein vorspringendes Element (111) des Trägers (107) aufweist, welches das erste Verriegelungselement (104) in seiner Verriegelungsposition teilweise abdeckt, wobei das vorspringende Element (111) dafür vorgesehen ist, zwischen das erste Verriegelungselement (104) und einen Spalt (E), welcher die Klappe (101) von einem Karosserieelement (112) des Fahrzeugs, welches in der Verlängerung der Klappe (101) bei geschlossener Position dieser Letzteren angeordnet ist, trennt, eingefügt zu werden.

8. Anordnung für ein Kraftfahrzeug, aufweisend:
- einen Karosserieabschnitt (113), welcher mit einem hohlen Raum (114) versehen ist, welcher insbesondere dafür vorgesehen ist, einen Kraftstofftank des Fahrzeugs zugänglich zu machen,
- eine Klappe (101) des Fahrzeugs, welche auf Höhe des hohlen Raums (114) angelenkt und dafür ausgelegt ist, um zwischen einer geöffneten Position und einer geschlossenen Position zu variieren, und
- eine Vorrichtung nach einem der Ansprüche 1 bis 7, welche auf Höhe des hohlen Raums (114) montiert ist, damit in geschlossener Position der Klappe (101) der Hebel (102) ständig einen Druck auf die Klappe (101) ausübt, indem er sie in Richtung auf die geöffnete Position vorspannt.

9. Anordnung nach dem vorhergehenden Anspruch, **dadurch gekennzeichnet, dass** die Vorrichtung ein erstes Verriegelungselement (104) aufweist und die Klappe (101) ein zweites Verriegelungselement (105) aufweist, und dass in einer geschlossenen und verriegelten Position der Klappe (105) das erste Verriegelungselement (104) eine Öffnung des zweiten Verriegelungselements (105) durchdringt und der Hebel (102) sich an dem zweiten Verriegelungselement (105) abstützt.

10. Kraftfahrzeug, aufweisend eine Anordnung nach einem der Ansprüche 8 oder 9.

## Claims

1. Device (100) for a fuel hatch (101) of a motor vehicle including:
- a lever (102) configured such as to change between a first position and a second position, the movement from the first position to the second position causing the hatch (101) to open,
- an urging member (103) such as a spring (103) that is separate from the lever (102) and constantly urges the lever (102) towards the second position,
- a supporting means (107), the lever (102) being hinged, particularly rotatably mounted, on said supporting means (107),
**characterized in that** the supporting means (107) includes a cavity (108) in which the spring (103) is housed, a first end (103a) of the spring (103) being mounted at a bottom of the cavity (108) and a second end (103b) of the spring (103), which end is opposite the first end (103a) of the spring (103), being mounted at a bearing area (102a) of the lever (102) such as to constantly urge the lever towards the second position thereof.

2. Device according to Claim 1, **characterized in that** it includes a first member (104) for locking the hatch (101), said first locking member (104) being suitable to change between a locking position wherein it is intended to engage a second locking member (105) linked to the hatch (101) such as to keep the hatch (101) in a closed position and the lever (102) in the first position, and an unlocking position wherein it releases the hatch (101) such as to allow the lever (102) to move from the first position thereof to the second position thereof.

3. Device according to either of Claims 1 and 2, **characterized in that** the urging member (103) is a compression spring, bearing both at the supporting means (107) and at the lever (102).

4. Device according to any one of the preceding claims, **characterized in that**, in the first position of the lever (102), the spring (103) is more compressed than in the second position of the lever (102).

5. Device according to Claim 2 and either of Claims 3 and 4, **characterized in that** the first locking member (104) is mounted at the supporting means (107).

6. Device according to Claim 5, **characterized in that** the first locking member (104) includes a slide slidingly mounted in a slideway (109) of the supporting means (107).

7. Device according to either of Claims 5 and 6, **characterized in that**, since the first locking member (104) juts out from the supporting means (107) in the locking position, the device includes a projecting element (111) of the supporting means (107) partially overlapping the first locking member (104) in the locking position thereof, said projecting element (111) being intended to be inserted between the first locking member (104) and a space (S) separating the hatch (101) from a body element (112) of the vehicle which is continuous with the hatch (101) in the closed position of the latter.

8. Arrangement for a motor vehicle comprising:
- a body part (113) provided with a hollow space (114), which space is particularly intended to make a fuel tank of the vehicle accessible,
- a hatch (101) of the vehicle, which hatch is hinged at the hollow space (114) and configured such as to change between an open position and a closed position, and
- a device, according to any one of claims 1 to 7, mounted at the hollow space (114) such that, in the closed position of the hatch (101), the lever (102) constantly exerts a pressure on the hatch (101) by urging it towards the open position thereof.

9. Arrangement according to the preceding claim, **characterized in that** the device includes a first locking member (104) and the hatch (101) includes a second locking member (105), and **in that**, in a closed and locked position of the hatch (105), the first locking member (104) passes through an opening of the second locking member (105) and the lever (102) bears on the second locking member (105).

10. Motor vehicle comprising an arrangement according to either of Claims 8 and 9.
